# EUROPEAN PATENT APPLICATION

(11) **EP 4 682 701 A1**
(43) Date of publication of application: **21.01.2026**
(21) Application number: 25157040.4
(22) Date of filing: 11.02.2025
(51) Int. Cl.: G06F 3/12

(54) **INFORMATION PROCESSING SYSTEM, PROGRAM AND INFORMATION PROCESSING METHOD**

(30) Priority: 17.07.2024 JP 2024114330
(71) Applicant: FUJIFILM Business Innovation Corp., Minato-ku Tokyo (JP)
(72) Inventor: MATSUI, Takao, Yokohama-shi (JP)
(74) Representative: Haseltine Lake Kempner LLP

(57) **Abstract**

An information processing system includes a processor configured to: output information on a cycledown that occurs between multiple new print jobs that are to be consecutively processed, by inputting, to a model, new input information including information on each of the new print jobs to be consecutively processed and information on print information to be printed in each of the new print jobs, the model being pre-learned to output information on a cycledown occurring between multiple print jobs when input information, including information on each of the print jobs to be consecutively processed and information on print information to be printed in each of the print jobs, is input.

## Description

### Background

### (i) Technical Field

The present disclosure relates to an information processing system, a program and an information processing method.

### (ii) Related Art

Japanese Unexamined Patent Application Publication No. 2018-39142 discloses a printing system. The printing system includes a controller including a raster image processor (RIP) that generates image data by rasterizing each page of print data and a printer including a print processing unit that performs a print operation in accordance with the image data. The controller in the printing system includes a RIP time calculating unit that calculates a RIP process prediction time used to perform a RIP operation on each page of the print data and a print condition acquisition unit that acquires a print condition of each page of the print data and transmits the print condition to the printer. The printer includes an information acquisition unit and a print processing information calculating unit. The information acquisition unit acquires performance information and environment information on the print processing unit. In accordance with the print condition, received from the controller, the performance information and the environment information, the print processing information calculating unit calculates print processing information and then transmits the print processing information to the controller. The print processing information includes print processing prediction time used to perform a print operation of each page of the print data and cycledown occurrence prediction time indicating a time period until a cycledown occurs in an environment during the printing of each page of the print data. The controller further includes a timing controller. The timing controller calculates time from the end of the print operation of page n (n is 1 or higher integer) to the end of the RIP operation of page (n + 1) in accordance with the print processing information, received from the printer, and the RIP process prediction time, determines a transmission timing of the image data on page (n + 1) and subsequent pages in accordance with the comparison results of the time with the cycledown occurrence prediction time, and transmits the image data to the printer at the determined transmission timing.

When the print jobs are consecutively processed, a cycledown occurs under a particular condition when the print job is changed. The cycledown is a time period that the printer uses to prepare for printing between the jobs.

Since productivity decreases by cycledowns, operation may be performed such that cycledowns occur as less as possible. The occurrence condition of the cycledown is complex and it is difficult to predict the cycledown before a print job. Planning a schedule of the print jobs in view of the cycledown is also difficult.

### Summary

Accordingly, it is an object of the present disclosure to provide an information processing system, a program and an information processing method that may predict information on a cycledown occurring between print jobs.

According to a first aspect of the present disclosure, there is provided an information processing system including a processor configured to: output information on a cycledown that occurs between multiple new print jobs that are to be consecutively processed, by inputting, to a model, new input information including information on each of the new print jobs to be consecutively processed and information on print information to be printed in each of the new print jobs, the model being pre-learned to output information on a cycledown occurring between multiple print jobs when input information, including information on each of the print jobs to be consecutively processed and information on print information to be printed in each of the print jobs, is input.

In the information processing system according to a second aspect in view of the first aspect, the information on the print jobs may include at least one piece of information on a printing surface, information on printing paper, information on a mode of printing colors, or information on a discharge destination of the printing paper that is printed.

In the information processing system according to a third aspect in view of one of the first and second aspects, the information on the print information may include at least one piece of information on a number of printing colors, information on toner, or information on a special color.

In the information processing system according to a fourth aspect in view of one of the first through third aspects, the input information further may include information on an environment where the print jobs are processed.

In the information processing system according to a fifth aspect in view of one of the first through fourth aspects, the input information further may include information on a printer that processes the print jobs.

In the information processing system according to a sixth aspect in view of one of the first through fifth aspects, the input information may include information on an order of processing the print jobs.

In the information processing system according to a seventh aspect in view of one of the first through sixth aspects, the information on the cycledown occurring between the print jobs may include presence or absence of the cycledown occurring between the print jobs and a time period of occurrence of the cycledown occurring between the print jobs.

In the information processing system according to an eighth aspect in view of one of the first through seventh aspects, the model may be learned using the time period of occurrence of the cycledown occurring between the print jobs, the time period being calculated from information on a result processed by a printer that processes the print jobs.

In the information processing system according to a ninth aspect in view of one of the first through eighth aspects, the processor is configured to: using the learned model, output the information on the cycledown occurring between the print jobs with respect to each of multiple patterns where an order of the print jobs is changed in a print schedule including a series of print jobs.

In the information processing system according to a tenth aspect in view of the ninth aspect, the processor may be configured to recommend at least one of the patterns in accordance with the information on the cycledown occurring between the print jobs output in each of the patterns.

In the information processing system according to an eleventh aspect in view of the tenth aspect, the information on the cycledown occurring between the print jobs may include presence or absence of the cycledown occurring between the print jobs, and the processor may be configured to recommend a pattern having a minimum number of occurrences of the cycledown among the patterns.

In the information processing system according to a twelfth aspect in view of the tenth aspect, the information on the cycledown occurring between the print jobs may include a time period of occurrence of the cycledown, and the processor may be configured to recommend a pattern having a minimum sum of time periods of occurrences from among the patterns.

According to a thirteenth aspect of the present disclosure, there is provided a program causing a computer to execute a process for processing information, the process including: outputting information on a cycledown that occurs between multiple new print jobs that are to be consecutively processed, by inputting, to a model, new input information including information on each of the new print jobs to be consecutively processed and information on print information to be printed in each of the new print jobs, the model being pre-learned to output information on a cycledown occurring between multiple print jobs when input information, including information on each of the print jobs to be consecutively processed and information on print information to be printed in each of the print jobs, is input.

According to a fourteenth aspect of the present disclosure, there is provided an information processing method comprising: outputting information on a cycledown that occurs between a plurality of new print jobs that are to be consecutively processed, by inputting, to a model, new input information including information on each of the new print jobs to be consecutively processed and information on print information to be printed in each of the new print jobs, the model being pre-learned to output information on a cycledown occurring between a plurality of print jobs when input information, including information on each of the print jobs to be consecutively processed and information on print information to be printed in each of the print jobs, is input.

According to the first or fourteenth aspect, the information on the cycledown occurring between the print jobs may be predicted.

According to the second aspect, the information on the cycledown occurring between the print jobs may be predicted in view of the information on the printing surface, information on the printing paper, information on the mode of printing colors, or information on the discharge destination of the printing paper that is printed.

According to the third aspect, the information on the cycledown occurring between the print jobs may be predicted in view of the information on the number of printing colors, information on the toner, or information on the special color.

According to the fourth aspect, the information on the cycledown occurring between the print jobs may be predicted in view of the information on the environment where the print jobs are processed.

According to the fifth aspect, the information on the cycledown occurring between the print jobs may be predicted in view of the information on the printer that processes the print jobs.

According to the sixth aspect, the information on the cycledown occurring between the print jobs may be predicted in view of the information on the order of processing the print jobs.

According to the seventh aspect, the presence or absence of the cycledown occurring between the print jobs and the time period of occurrence of the cycledown occurring between the print jobs may be predicted.

According to the eighth aspect, the time period of occurrence of the cycledown used in learning may be calculated from the information on the record processed by the printer that processes the print jobs.

According to the ninth aspect, the information on the cycledown may be predicted concerning each of the patterns where the order of the print jobs is changed in the print schedule including the series of print jobs.

According to the tenth aspect, at least one of the patterns may be recommended from among the patterns where the order of the print jobs is changed in the print schedule including the series of print jobs.

According to the eleventh aspect, the pattern having the minimum number of occurrences of the cycledown may be recommended.

According to the twelfth aspect, the pattern having the minimum sum of time periods of occurrences may be recommended.

According to the thirteenth aspect of the disclosure, the information on the cycledown occurring between the print jobs may be predicted.

### Brief Description of the Drawings

Exemplary embodiment of the present disclosure will be described in detail based on the following figures, wherein:
Fig. 1 schematically illustrates an information processing system of an exemplary embodiment;
Fig. 2 is a block diagram illustrating an electrical system of a printer in the information processing system of the exemplary embodiment;
Fig. 3 is a block diagram illustrating an electrical system of a server and a management apparatus in the information processing system of the exemplary embodiment;
Fig. 4 is a functional block diagram illustrating a functional configuration of the management apparatus in the information processing system of the exemplary embodiment;
Fig. 5 illustrates an example of record information on jobs;
Fig. 6 illustrates an example of the status of each job;
Fig. 7 illustrates an example of record information on devices;
Fig. 8 illustrates an example of the record information on the devices;
Fig. 9 illustrates an example of jobs in a print schedule with the order of the jobs changed;
Fig. 10 is a functional block diagram illustrating a functional configuration of the server in the information processing system of the exemplary embodiment;
Fig. 11 illustrates an example of a learned neural network model;
Fig. 12 illustrates an example of a cycledown occurring between jobs;
Fig. 13 illustrates an example of print jobs that are scheduled in an order that restricts the occurrence of the cycledown;
Fig. 14 is a flowchart illustrating an example of a process flow of a learning process performed in the server in the information processing system of the exemplary embodiment; and
Fig. 15 is a flowchart illustrating an example of a process flow of an estimation process performed in the server of the information processing system of the exemplary embodiment.

### Detailed Description

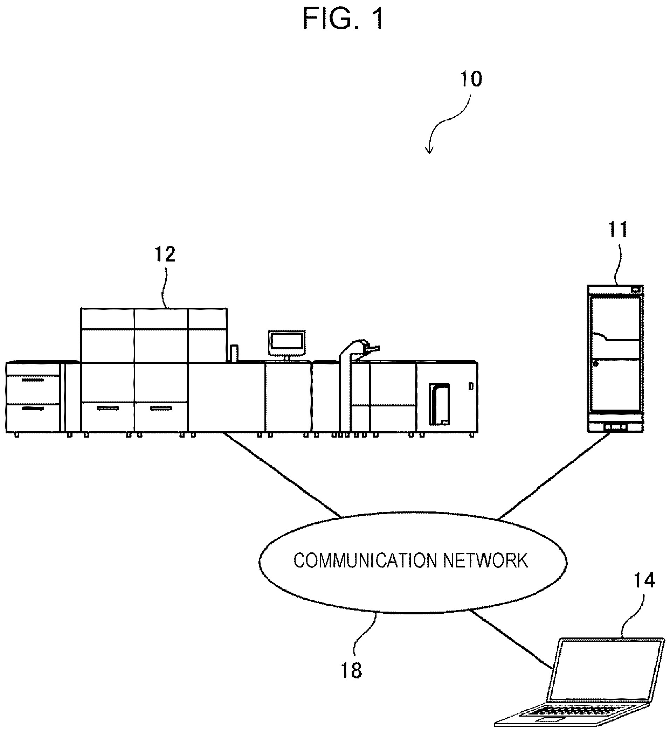

An example of an exemplary embodiment of the disclosure is described in detail below with reference to the drawings. The exemplary embodiment is related to an information processing system 10 in which a management apparatus, printer, client computer and the like are interconnected to each other via a communication network including a variety of networks. Fig. 1 schematically illustrates the information processing system 10 of the exemplary embodiment.

Referring to Fig. 1, the information processing system 10 of the exemplary embodiment includes a server 11, printer 12, and management apparatus 14. The server 11, printer 12, and the management apparatus 14 are connected to each other via a communication network 18 including a local-area network (LAN), wide-area network (WAN), Internet and/or Intranet. The server 11, printer 12, and management apparatus 14 may exchange a variety of data with each other via the communication network 18. According to the exemplary embodiment, the printer 12 performs printing responsive to a print instruction when the print instruction is provided to the printer 12 from the management apparatus 14.

Referring to Fig. 1, the information processing system 10 incudes one or more servers 11, one or more printers 12, and one or more management apparatuses 14.

The printer 12 of the exemplary embodiment has multiple functions including a printing function that performs a printing process, and a post-process function that performs a post-process on the printed paper and other functions. The multiple functions may include a reading function that obtains image information representing a document by reading the document, a copying function that copies an image recorded on a document to a paper sheet, a facsimile function that transmits or receives a variety of data via a telephone network (not illustrated), a transfer function that transfers document information, such as image information that is read by the reading function, and a storage function that stores the read image information.

In the following discussion, the facsimile function, reading function, printing function and copying function may be occasionally respectively referred to as fax, scan, print and copy.

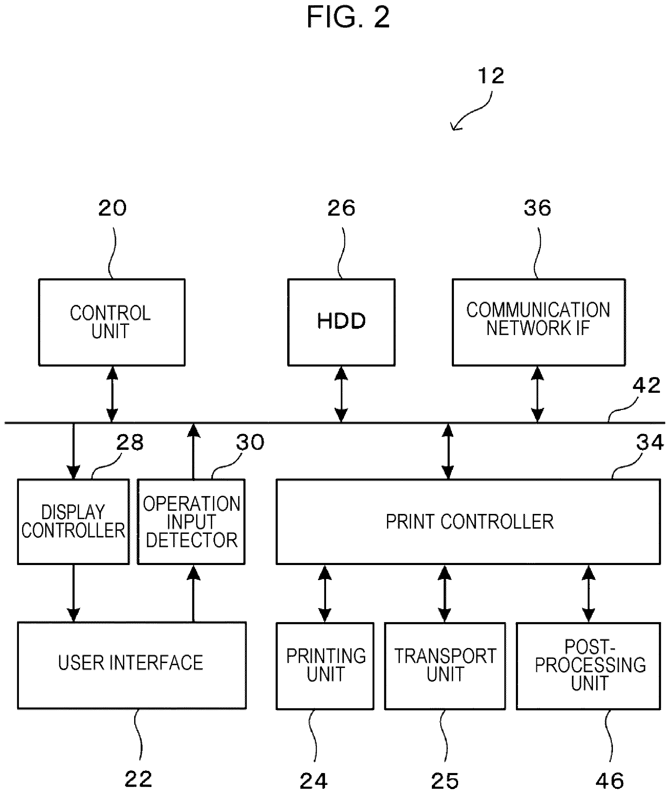

Fig. 2 is a block diagram illustrating an electrical configuration of the printer 12 in the information processing system 10 of the exemplary embodiment.

Referring to Fig. 2, the printer 12 of the exemplary embodiment may include a control unit 20. The control unit 20 may include a central processing unit (CPU), read-only memory (ROM) and random-access memory (RAM).

The printer 12 of the exemplary embodiment further includes a hard disk drive (HDD) 26 that stores a variety of data, application programs and the like. The printer 12 further includes a display controller 28 that is connected to a user interface 22 and controls displaying of a variety of screens on a display of the user interface 22. The printer 12 further includes an operation input detector 30 that is connected to the user interface 22 and detects an operation instruction input via the user interface 22. In the printer 12, a system bus 42 is electrically connected to the HDD 26, display controller 28 and operation input detector 30. In the printer 12 of the exemplary embodiment, a memory is the HDD 26 but alternatively, may be a non-volatile memory, such as a flash memory. In the exemplary embodiment, the user interface 22 is a touch panel that serves as a display capable of receiving an operational input but alternatively, the user interface 22 may include a display and an operation unit that are separate from each other.

The printer 12 of the exemplary embodiment includes a print controller 34 that controls a printing process of a printing unit 24, transport operation of a transport unit 25 transporting a paper sheet to the printing unit 24, and post-process of a post-processing unit 46. The printer 12 may further include a reading controller that controls a reading operation of an optical document reader optically reading an image and a document transport operation of a document transport unit. The printer 12 includes a communication network interface (IF) 36 that is connected to the communication network 18 and exchanges communication data with another external apparatus, such as the management apparatus 14 connected to the communication network 18. The printer 12 may include a fax interface that is connected to a telephone line (not illustrated) and exchanges fax data with a fax device connected to the telephone line. The printer 12 may include a transmission-reception controller that controls transmission and reception of the fax data via a fax IF 38. The print controller 34 and communication network IF 36 are electrically connected to the system bus 42 in the printer 12.

The control unit 20 in the printer 12 of the exemplary embodiment thus configurated controls an operation screen of the display of the user interface 22 and a display operation of information, such as a variety of messages, via the display controller 28. Using the print controller 34, the control unit 20 in the printer 12 controls operations of the printing unit 24, transport unit 25, and post-processing unit 46 and exchange of the communication data via the communication network IF 36. The control unit 20 in the printer 12 recognizes operation contents on the user interface 22 in accordance with operation information detected by the operation input detector 30 and thus performs a variety of controls in response to the operation contents.

Applications stored on the HDD 26 include, for example, an application for printing in the exemplary embodiment.

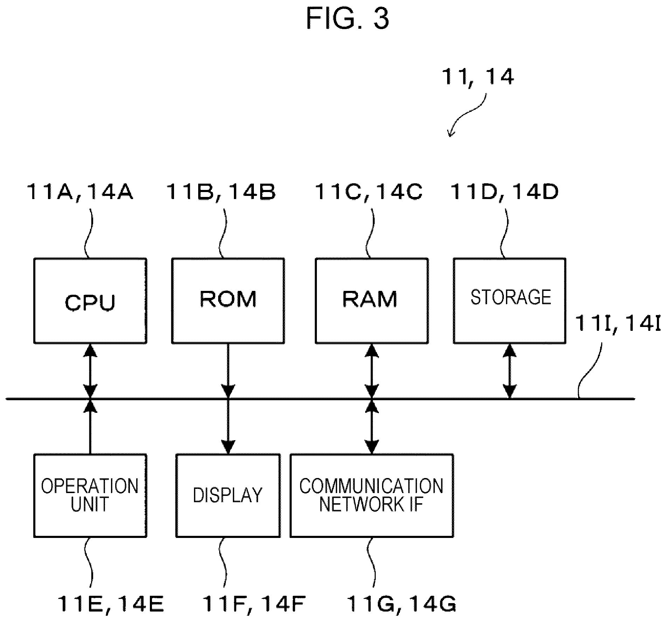

The electrical configuration of the server 11 and management apparatus 14 of the exemplary embodiment is described below. Fig. 3 is a block diagram illustrating the electrical configuration of the server 11 and management apparatus 14 in the information processing system 10 of the exemplary embodiment. The server 11 and management apparatus 14 have a typical computer configuration and only the server 11 is described herein.

As illustrated in Fig. 3, the server 11 of the exemplary embodiment includes a CPU 11A, ROM 11B, RAM 11C, storage 11D, operation unit 11E, display 11F and communication network IF 11G. The CPU 11A controls the whole operation of the server 11. The ROM 11B pre-stores a variety of control programs and a variety of parameters. The RAM 11C is used as a working area when the CPU 11A executes the programs. The storage 11D stores a variety of data and application programs. The operation unit 11E is used to input a variety of information. The display 11F is used to display a variety of information. The communication network IF 11G is connected to the communication network 18 and exchanges a variety of data with another apparatus connected to the communication network 18. The communication network IF 11G may be configurated to communicate with apparatuses using a variety of wireless communications of the related art. The elements of the server 11 described above are electrically connected to each other via a system bus 11I. The storage 11D is used as a memory in the server 11 of the exemplary embodiment but alternatively, a non-volatile memory, such as an HDD or flash memory, may be used in the server 11.

The CPU 11A in the server 11 of the exemplary embodiment thus configurated accesses the ROM 11B, RAM 11C and storage 11D, retrieves a variety of data from these memories via the operation unit 11E and displays a variety of information on the display 11F. The CPU 11A in the server 11 controls exchange of communication data via the communication network IF 11G.

The management apparatus 14 in the information processing system 10 thus configurated manages a series of manufacturing processes. The series of manufacturing processes include a creation process, pre-press process, pressplate process, printing process, processing process and delivery process.

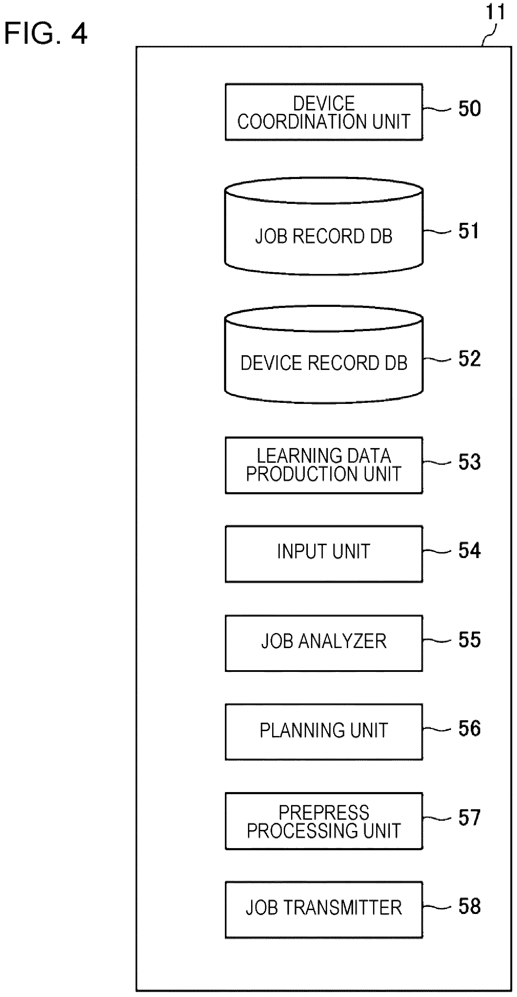

Functional configuration of the management apparatus 14 is described below. Fig. 4 is a block diagram illustrating the functional configuration of the management apparatus 14.

The management apparatus 14 is functionally configurated as illustrated in Fig. 4 to include a device coordination unit 50, job record database (DB) 51, device record DB 52, learning data production unit 53, input unit 54, job analyzer 55, planning unit 56, prepress processing unit 57, and job transmitter 58.

The device coordination unit 50 acquires, from the printing unit 24 and the post-processing unit 46 in the printer 12, device record information including device status information, job status information, and job record information including print log or manufacturing log.

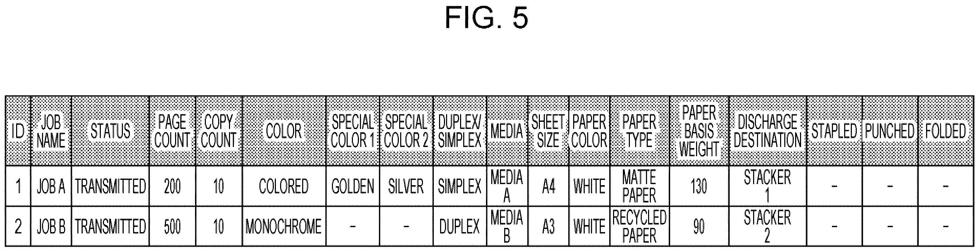

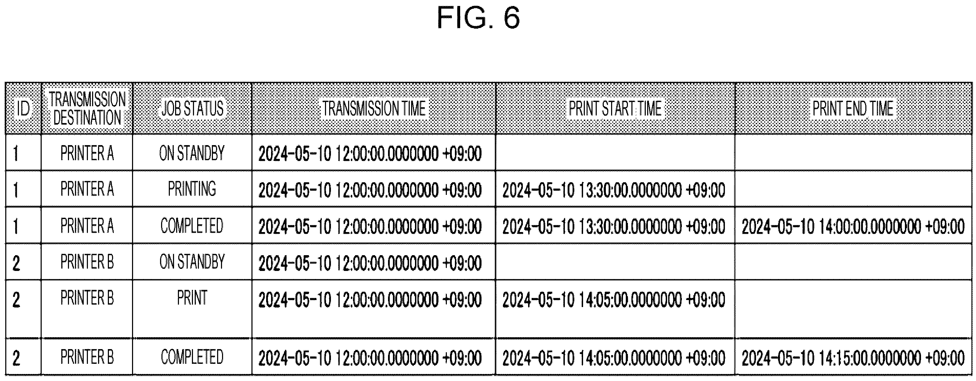

The job record DB 51 stores the job record information acquired by the device coordination unit 50. For example, the job record DB 51 stores the print log or manufacturing log on job as illustrated in Fig. 5 and the job record information including the job status information as illustrated in Fig. 6. Referring to Fig. 5, the job status information includes items of each job including "status," "page count," "copy count," "color," "special color 1," "special color 2," "duplex/simplex," "media," "sheet size," "paper color," "paper type," "paper basis weight," "discharge destination," "stapled," "punched," and "folded." Referring to Fig. 6, the job status information includes items of each job including "transmission destination," "job status," "transmission time," "print start time," and "print end time."

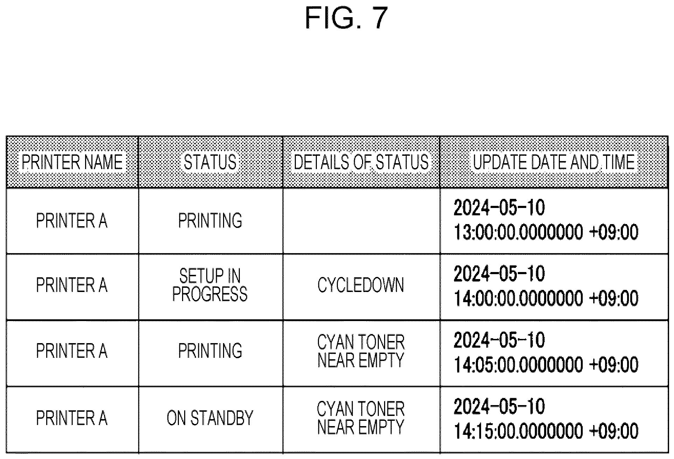

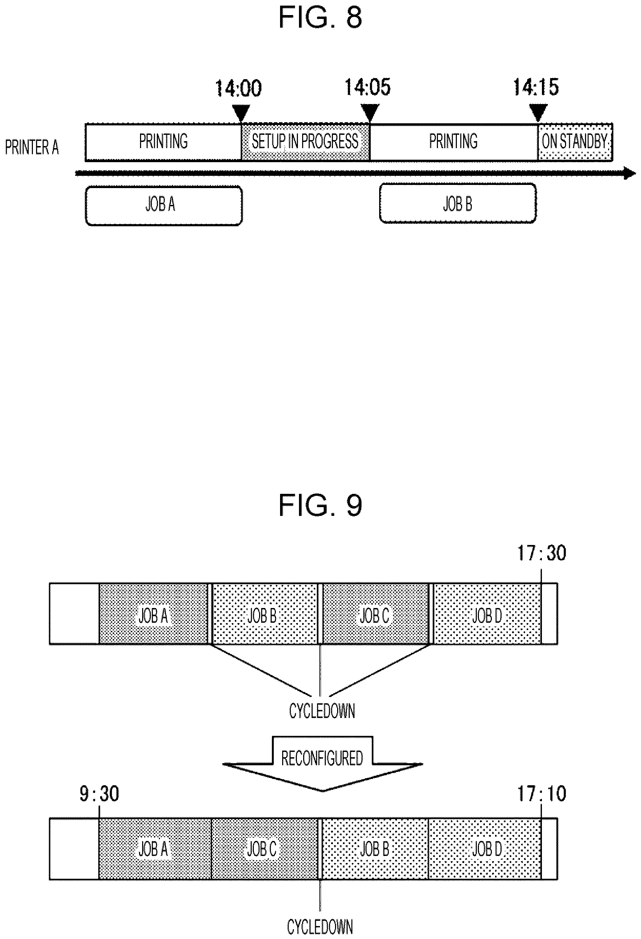

The device record DB 52 stores the device record information acquired by the device coordination unit 50. For example, the device record DB 52 stores the device record information including the device status information as illustrated in Fig. 7. Referring to Fig. 7, the job status information includes items including "printer name," "status," "details of status," and "update date and time," and referring to Fig. 8, a cycledown occurs between jobs A and B on "printer A."

The learning data production unit 53 produces learning data including a pair of a piece of input information on multiple jobs consecutively processed in the past and a piece of information on a cycledown occurring between the print jobs.

The input information may include information on each of the print jobs to be consecutively processed. The information on the print job may include information on settings of the print job. Specifically, the information on the settings of the print job includes at least one piece selected from the group consisting of information on a printing surface, information on printing paper, information on a mode of printing colors, and information on a discharge destination of printed paper. The information on the printing surface includes, for example, information on whether printing is duplex or simplex printing. The information on the printing paper includes sheet size, paper color, and paper type. The information on the mode of printing color includes, for example, information indicating whether the printing is in a monochrome mode or a color mode. The information on the destination of the printed paper includes information identifying a stacker serving as a discharge destination.

The learning data production unit 53 retrieves from the job record DB 51 in the management apparatus 14 information on each of the print jobs that are consecutively processed.

The input information may include information on print information to be printed in each of the print jobs that are consecutively processed. The information on the print information may include information that is obtained by analyzing the print information. Specifically, the information obtained by analyzing the print information includes at least one piece selected from the group consisting of information on the number of printing colors, information on toner, and information on a special color. The information on the toner includes, for example, the amount of the toner. The information on the special color includes, for example, the presence or absence of the special color, and the type of the special color.

The learning data production unit 53 retrieves from the job record DB 51 in the management apparatus 14 the information on the print information to be printed in each of the print jobs that are consecutively printed.

The input information may include the information on the environment where the print jobs are processed. The information on the environment includes, for example, temperature and humidity.

The temperature and humidity detected by sensors are input to the management apparatus 14 and managed as log information by the management apparatus 14.

The learning data production unit 53 acquires, from the log information stored on the management apparatus 14, the information on the environment where the print jobs are processed.

The input information may include information on the printer 12 that processes the print jobs. The information on the printer 12 includes, for example, information identifying the printer 12 or information indicating the type of the printer 12.

The information identifying the printer 12 or the information indicating the type of the printer 12 is input to the management apparatus 14 and is managed as the log information by the management apparatus 14.

The input information may include information on an order of processing the print jobs.

The learning data production unit 53 acquires, from the log information stored on the management apparatus 14, the information on the printer 12 processing the print jobs.

The learning data production unit 53 calculates the information on the cycledown occurring between the print jobs from information on a record processed by the printer 12.

The learning data production unit 53 acquires the information on the cycledown occurring between the print jobs.

The information on the cycledown occurring between the print jobs includes the presence or absence of the cycledown occurring between the print jobs or a time period of occurrence of the cycledown occurring between the print jobs.

Specifically, the learning data production unit 53 acquires, from the device record information stored on the device record DB 52, the presence or absence of cycledown occurring between the print jobs or the time period of the cycledown occurring between the print jobs.

In the example illustrated in Fig. 7, the learning data production unit 53 acquires the time period of occurrence of the cycledown occurring between the print jobs is "0:05:00. 00000000" from a difference between update date and time in status "setup in progress" "14:00:00 00000000" and update date and time in status "printing" "14:05:00. 00000000."

The input unit 54 receives order information input by the user. The order information includes product specifications, client address, and delivery. The input unit 54 also receives the information, input by the user, on each of the print jobs that are consecutively processed. The user inputs the order information and the information each of the print jobs via the WebUI by accessing a WebUI via a browser displayed on a user terminal. Each print job is produced in accordance with the input order information and information on each of the print jobs.

In the above description, the user inputs the information on each of the print jobs to be consecutively processed. The disclosure is not limited to this method. For example, the user may input the information on each of the print jobs to be consecutively processed, by selecting multiple print jobs from the print jobs already produced.

The job analyzer 55 acquires, from a file server (not illustrated), the print information to be printed in the print job (for example, portable document format (PDF) data), analyzes the print information, and thus acquires the information on the number of printing colors, the information on the toner, and the information on the special color.

With respect to each of multiple patterns where an order of the print jobs is changed in a print schedule including a series of print jobs, the planning unit 56 communicates with the server 11 in connection with each interval between the print jobs included in each pattern and acquires the information on the cycledown occurring between the print jobs. The server 11 then outputs the information on the cycledown occurring between the print jobs using the learned mode.

The planning unit 56 recommends to the user as a print schedule a pattern having a minimum number of cycledowns among the multiple patterns (see Fig. 9). Alternatively, the planning unit 56 recommends to the user as a print schedule a pattern having the largest sum of time periods of cycledowns among the multiple patterns (see Fig. 9).

Referring to Fig. 9, the cycledown occurs three times in a pattern where jobs A, B, C, and D are executed in that order while the cycledown occurs once in a pattern where jobs A, C, B and D in that order.

The preprocess processing unit 57 performs the prepress process including preflight, imposition, attaching a barcode, and attaching a watermark.

The job transmitter 58 transmits to the printer 12 the print information and the information on the print job.

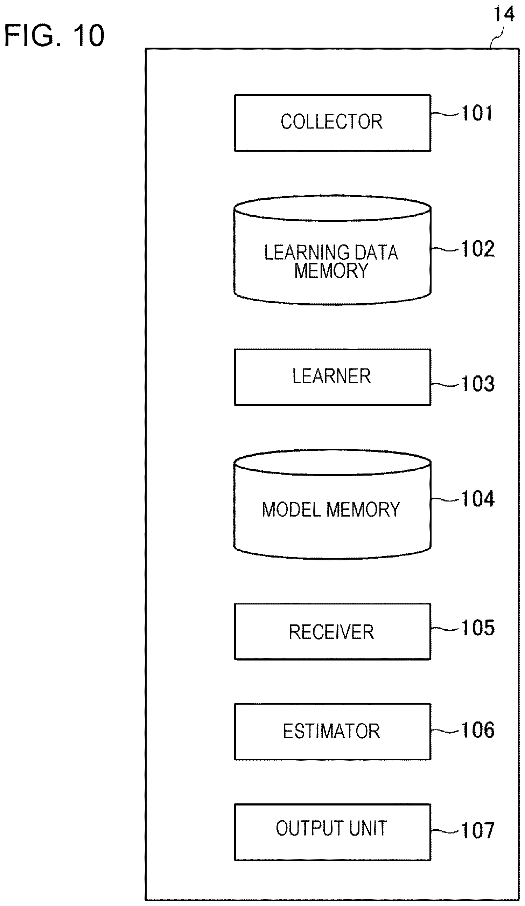

The functional configuration of the server 11 is described below. Fig. 10 is a block diagram illustrating the functional configuration of the server 11.

The server 11 is functionally configurated as illustrated in Fig. 10 to include a collector 101, learning data memory 102, learner 103, model memory 104, receiver 105, estimator 106 and output unit 107.

The collector 101 collects learning data including a pair of a piece of input information on the print jobs consecutively processed in the past and a piece of information on a cycledown occurring between the print jobs with respect to the input information.

The learning data memory 102 stores multiple pieces of learning data collected by the collector 101.

In accordance with the multiple pieces of learning data, the learner 103 constructs a neural network model that receives the input information and estimates a cycledown occurring between the print jobs in response to the input information.

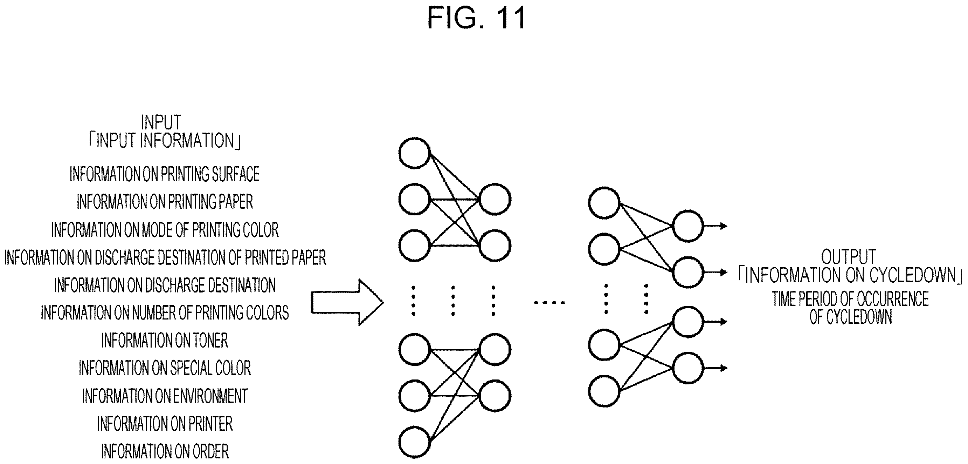

Specifically, the learned neural network model receives the input information including at least one piece selected from the group consisting of the information on the printing surface, information on the printing paper, information on the mode of printing color, information on the discharge destination of the printing paper that is printed, information on the number of printing colors, information on the toner, information on the special color, information on the environment, information on the printer 12, and information on the order. The learned neural network model outputs the time period of cycledowns occurring between the print jobs (see Fig. 11). Specifically, deep learning may be used as an example of a learning algorithm. The neural network model may be constructed such that the time period of occurrence of cycledowns occurring between the print jobs in the learning data is output when the input information as the learning data is input.

Specifically, the time period of occurrence of cycledowns is estimated as the output of the model with the model receiving the input information as the learning data, the estimated time period of occurrence of the cycledowns is compared with the time period of occurrence of the cycledowns in the learning data, an error between the time periods of occurrence of the cycledowns is calculated, and parameters of the model may be updated in a manner such that the value of the error is minimized.

The learned neural network model may output the presence or absence of a cycledown occurring between print jobs or a probability of occurrence of the cycledown occurring between the print jobs. In such a case, the presence or absence of the cycledown occurring between the print jobs or the probability of occurrence of the cycledown occurring between the print jobs is estimated as the output of the model with the model receiving the input information as the learning data, the estimated presence or absence of the cycledown or the estimated probability are respectively compared with the presence or absence of the cycledown or the probability in the learning data, an error in the presence or absence of the cycledown or the probability is calculated, and parameters of the model may be updated in a manner such that the value of the error is minimized.

Correlation between the input information and the information on the cycledown occurring between the print jobs is described below herein.

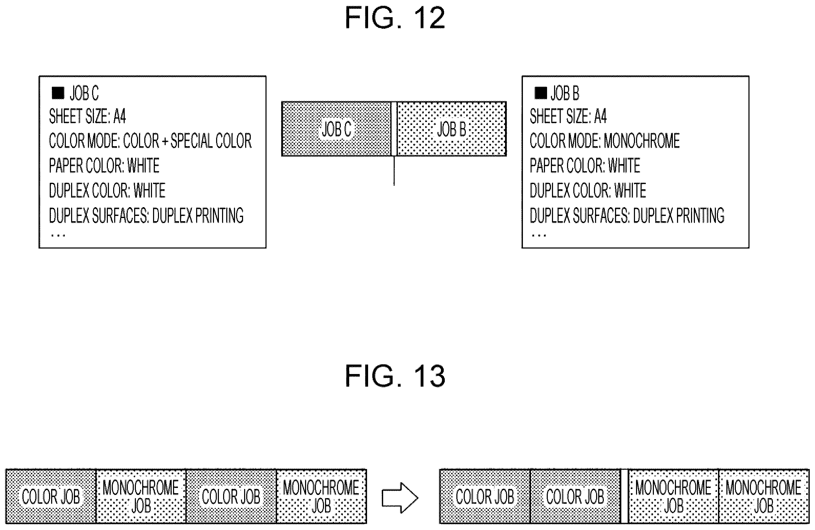

Since a cycledown occurs in response to switching between the print jobs, a hypothesis of occurrence condition may be made in accordance with the information on the print jobs printed prior to and subsequent to the print jobs. The information on the cycledown is determined from the operation record of the printer 12 and is used to examine the hypothesis and thus to improves the accuracy of the hypothesis. This process may be learned by a neural network model. For example, Fig. 12 illustrates an example in which a cycledown occurs when the color mode of the print job C is "color + special color" and the color mode of the print job B is "monochrome."

For example, when information on the jobs A and B are input, the time period of a predicted cycledown may vary depending on whether the jobs A and B are processed in the order of from the job A to the job B or from the job B to the job A. Therefore, there is a correlation between the information on the order and the information on the cycledown occurring between the print jobs.

If the learned neural network model is able to predict the information on the cycledown occurring between the print jobs, the print jobs may be scheduled in the order that restricts the occurrence of the cycledown. Fig. 13 illustrates the print jobs that are scheduled in the order restricting the occurrence of the cycledown by modifying the schedule that causes the cycledown to occur between the print jobs to be consecutively processed.

The model memory 104 stores the learned neural network model.

The receiver 105 receives the input information on the print jobs that serve as an estimation target and are newly to be processed.

The input information includes the information on the print jobs that are to be consecutively processed. Specifically, the information on the print jobs may include information on the settings of the print jobs. Specifically, the information on the print jobs includes at least one piece selected from the group consisting of the information on the printing surface, information on the printing paper, information on the mode of printing color, and information on the discharge destination of the printing paper that is printed. For example, the receiver 105 receives the information "duplex" indicating whether the printing is duplex or not, sheet size "A4," information "color" on the mode of the printing color, and information "stacker 1" identifying a stacker serving as a discharge destination.

The input information may also include the information on the print information to be printed in each of the print jobs to be consecutively processed. The information on the print information may include information that is obtained by analyzing the print information. Specifically, the information obtained by analyzing the print information includes at least one piece selected from the group consisting of the information on the number of printing colors, information on the toner, and information on the special color. The information on the toner includes, for example, an amount of the toner. For example, the receiver 105 receives information as an analysis result of the job analyzer 55 including "two colors" on the number of printing colors, the amount of the toner, and the presence or absence of the special color "present".

The input information may include the information on the environment where the print jobs are processed. The information on the environment includes, for example, temperature and humidity. For example, the receiver 105 receives a temperature of "20 degrees," or a humidity of "40%", from a sensor detecting temperature or humidity in the environment where the printer 12 is installed.

The input information may include the information on the printer 12 that processes the print jobs. For example, the information on the printer 12 includes information identifying the printer 12 or information indicating the type of the printer 12. For example, the receiver 105 receives information "printer A" input by the user and identifying the printer 12.

The input information may include the information on the order of processing the print jobs. For example, the receiver 105 receives information "from job A to job B" on the order of processing the print jobs.

Using the learned neural network model stored on the model memory 104, the estimator 106 estimates the information on the cycledown occurring between the print jobs in response to the received input information.

Specifically, the estimator 106 converts a variety of information included in the received input information in terms of data format (such as to a scaler value or a vector) receivable by the learned neural network model, input the information to the learned neural network model, and estimates the information on the cycledown occurring between the print jobs from the output of the learned neural network model.

The output unit 107 transmits to the management apparatus 14 the estimated information on the cycledown occurring between the print jobs. In this way, with respect to each of the patterns where the order of the print jobs is changed in the print schedule including the series of print jobs, the planning unit 56 acquires the information on the cycledown occurring between the print jobs in each interval between the print jobs included in the pattern. The planning unit 56 recommends to the user as a print schedule the pattern having a minimum number of cycledowns among the multiple patterns. Alternatively, the planning unit 56 recommends to the user as a print schedule a pattern having the largest sum of time periods of cycledowns among the multiple patterns.

Specific process performed by the information processing system 10 thus configurated is described below.

In the management apparatus 14, the device coordination unit 50 acquires the device record information including the device status information from the printing unit 24 and the post-processing unit 46 in the printer 12 and stores the device record information on the device record DB 52. The device coordination unit 50 also acquires the job status information and the job record information including print log or manufacturing log and then stores the status information and the record information on the job record DB 51.

The learning data production unit 53 produces the learning data including a pair of a piece of input information on the print jobs consecutively processed in the past and a piece of information on a cycledown occurring between the print jobs.

The learning data production unit 53 in the management apparatus 14 calculates the information on the cycledown occurring between the print jobs from the information on the record processed by of the printer 12 processing the print jobs.

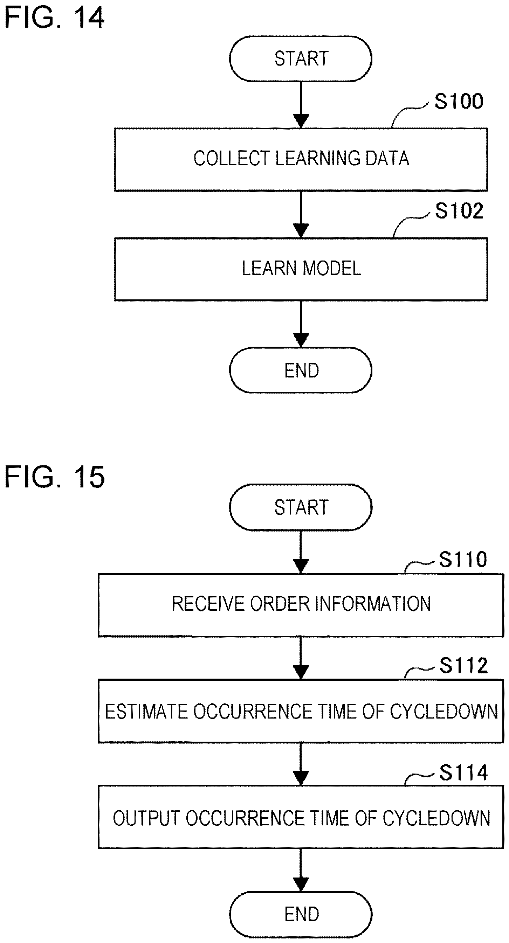

The CPU 14A in the server 11 reads a learning program from the ROM 14B or storage 14D, loads the learning program onto the RAM 14C, and thus performs a learning process illustrated in Fig. 14.

In step S100, the CPU 14A operating as the collector 101 collects the learning data produced by the learning data production unit 53 in the management apparatus 14 and stores the learning data onto the learning data memory 102. The learning data includes the pair of the piece of input information on the print jobs consecutively processed in the past and the piece of information on the cycledown occurring between the print jobs in view of the input information.

In step S102, the CPU 14A operating as the learner 103 learns a neural network that receives the input information and estimates the information on the cycledown occurring between the print jobs in view of the input information. The CPU 14A stores the learned neural network model on the model memory 104 and ends the learning process.

The input unit 54 in the management apparatus 14 receives the order information input by the user. The input unit 54 also receives the information, input by the user, on each of the print jobs to be consecutively processed.

The job analyzer 55 acquires, from the file server, the print information to be printed in the print job (for example, PDF data), analyzes the print information, and thus acquires the information on the number of printing colors, information on the toner, and information on the special color.

With respect to each of the multiple patterns where the order of the print jobs is changed in the print schedule including the series of print jobs, the planning unit 56 transmits to the server 11 the input information on multiple new print jobs to be consecutively processed, as an estimation target, in view of each interval between the print jobs included in the pattern.

In the server 11, the CPU 14A retrieves an estimation program from the ROM 14B or storage 14D, loads the estimation program on the RAM 14C, executes the estimation program, and thus performs an estimation process illustrated in Fig. 15.

In step S110, the CPU 14A operating as the receiver 105 receives the input information on the print jobs to be newly processed. The input information is input by the user and serves as the estimation target.

In step S112, the CPU 14A operating as the estimator 106 uses the learned neural network model stored on the model memory 104, thereby estimating the information on the cycledown occurring between the print jobs responsive to the received input information.

In step S114, the CPU 14A operating as the output unit 107 transmits to the management apparatus 14 the estimated information on the cycledown occurring between the print jobs and ends the estimation process.

With respect to each of the patterns where the order of the print jobs is changed in the print schedule including the series of print jobs, the planning unit 56 in the management apparatus 14 acquires the information on the cycledown occurring between the print jobs in view of each of the intervals between the print jobs included in each pattern.

The planning unit 56 recommends to the user as a print schedule a pattern having a minimum number of cycledowns among the multiple patterns. Alternatively, the planning unit 56 recommends to the user as a print schedule a pattern having the largest sum of time periods of cycledowns among the multiple patterns.

When the print jobs are successively processed, the information on the cycledown occurring between the print jobs may be predicted through the processes described above.

### Modifications

The disclosure is not limited to the exemplary embodiment described above and may be changed or modified without departing from the scope of the disclosure.

In the exemplary embodiment, among multiple companies, an information processing system may be configurated to include a pair of printer and management apparatus in each company. A neural network model may thus be learned using the learning data obtained in each company.

According to the exemplary embodiment, the information on the cycledown occurring between the print jobs is estimated by receiving a variety of pieces of input information. The information on the cycledown occurring between the print jobs may be estimated by receiving only a subset of the pieces of the input information instead of all the pieces of the input information.

According to the exemplary embodiment, the server 11 estimates the information on the cycledown occurring between the print jobs while learning the model. Alternatively, the server 11 may be divided into a learner that learns a model and an estimator that estimates the information on the cycledown occurring between the print jobs.

In the exemplary embodiment above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the exemplary embodiment above, the term "processor" is broad enough to encompass one processor or plural processors in collaboration which are located physically apart from each other but may work cooperatively. The order of operations of the processor is not limited to one described in the exemplary embodiment above, and may be changed.

According to the exemplary embodiment, the system is configurated to include multiple apparatuses but alternatively, is configurated to include only a single apparatus having a subset of the functions of the apparatuses.

The process of the printer 12 of the exemplary embodiment may be performed using software, hardware or both. The process of the printer 12 may be stored as a program on a memory and then the memory with the program recorded thereon may be delivered. The disclosed technology may be applied to program products.

The disclosure is not limited to the configurations described above and may be changed or modified without departing from the scope of the disclosure.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) An information processing system including:
   a processor configured to:
   output information on a cycledown that occurs between multiple new print jobs that are to be consecutively processed, by inputting, to a model, new input information including information on each of the new print jobs to be consecutively processed and information on print information to be printed in each of the new print jobs, the model being pre-learned to output information on a cycledown occurring between multiple print jobs when input information, including information on each of the print jobs to be consecutively processed and information on print information to be printed in each of the print jobs, is input.
(((2))) In the information processing system according to (((1))), the information on the print jobs includes at least one piece of information on a printing surface, information on printing paper, information on a mode of printing colors, or information on a discharge destination of the printing paper that is printed.
(((3))) In the information processing system according to one of (((1))) and (((2))), the information on the print information includes at least one piece of information on a number of printing colors, information on toner, or information on a special color.
(((4))) In the information processing system according to one of (((1))) through (((3))), the input information further includes information on an environment where the print jobs are processed.
(((5))) In the information processing system according to one of (((1))) through (((4))), the input information further includes information on a printer that processes the print jobs.
(((6))) In the information processing system according to one of (((1))) through (((5))), the input information includes information on an order of processing the print jobs.
(((7))) In the information processing system according to one of (((1))) through (((6))), the information on the cycledown occurring between the print jobs includes presence or absence of the cycledown occurring between the print jobs and a time period of occurrence of the cycledown occurring between the print jobs.
(((8))) In the information processing system according to one of (((1))) through (((7))), the model is learned using the time period of occurrence of the cycledown occurring between the print jobs, the time period being calculated from information on a record processed by a printer that processes the print jobs.
(((9))) In the information processing system according to one of (((1))) through (((8))), the processor is configured to:
   using the learned model, output the information on the cycledown occurring between the print jobs with respect to each of multiple patterns where an order of the print jobs is changed in a print schedule including a series of print jobs.
(((10))) In the information processing system according to (((9))), the processor is configured to recommend at least one of the patterns in accordance with the information on the cycledown occurring between the print jobs output in each of the patterns.
(((11))) In the information processing system according to (((10))), the information on the cycledown occurring between the print jobs includes presence or absence of the cycledown occurring between the print jobs, and
   wherein the processor is configured to recommend a pattern having a minimum number of occurrences of the cycledown among the patterns.
(((12))) In the information processing system according to (((10))), the information on the cycledown occurring between the print jobs includes a time period of occurrence of the cycledown, and
   wherein the processor is configured to recommend a pattern having a minimum sum of time periods of occurrences from among the patterns.
(((13))) A program causing a computer to execute a process for processing information, the process including:
   outputting information on a cycledown that occurs between multiple new print jobs that are to be consecutively processed, by inputting, to a model, new input information including information on each of the new print jobs to be consecutively processed and information on print information to be printed in each of the new print jobs, the model being pre-learned to output information on a cycledown occurring between multiple print jobs when input information, including information on each of the print jobs to be consecutively processed and information on print information to be printed in each of the print jobs, is input.

According to (((1))), the information on the cycledown occurring between the print jobs may be predicted.

According to (((2))), the information on the cycledown occurring between the print jobs may be predicted in view of the information on the printing surface, information on the printing paper, information on the mode of printing colors, or information on the discharge destination of the printing paper that is printed.

According to (((3))), the information on the cycledown occurring between the print jobs may be predicted in view of the information on the number of printing colors, information on the toner, or information on the special color.

According to (((4))), the information on the cycledown occurring between the print jobs may be predicted in view of the information on the environment where the print jobs are processed.

According to (((5))), the information on the cycledown occurring between the print jobs may be predicted in view of the information on the printer that processes the print jobs.

According to (((6))), the information on the cycledown occurring between the print jobs may be predicted in view of the information on the order of processing the print jobs.

According to (((7))), the presence or absence of the cycledown occurring between the print jobs and the time period of occurrence of the cycledown occurring between the print jobs may be predicted.

According to (((8))), the time period of occurrence of the cycledown used in learning may be calculated from the information on the result processed by the printer that processes the print jobs.

According to (((9))), the information on the cycledown may be predicted concerning each of the patterns where the order of the print jobs is changed in the print schedule including the series of print jobs.

According to (((10))), at least one of the patterns may be recommended from among the patterns where the order of the print jobs is changed in the print schedule including the series of print jobs.

According to (((11))), the pattern having the minimum number of occurrences of the cycledown may be recommended.

According to (((12))), the pattern having the minimum sum of time periods of occurrences may be recommended.

According to (((13))), the information on the cycledown occurring between the print jobs may be predicted.

## Claims

1. An information processing system comprising:
a processor configured to:
output information on a cycledown that occurs between a plurality of new print jobs that are to be consecutively processed, by inputting, to a model, new input information including information on each of the new print jobs to be consecutively processed and information on print information to be printed in each of the new print jobs, the model being pre-learned to output information on a cycledown occurring between a plurality of print jobs when input information, including information on each of the print jobs to be consecutively processed and information on print information to be printed in each of the print jobs, is input.

2. The information processing system according to claim 1, wherein the information on the print jobs includes at least one piece of information on a printing surface, information on printing paper, information on a mode of printing colors, or information on a discharge destination of the printing paper that is printed.

3. The information processing system according to one of claims 1 and 2, wherein the information on the print information comprises at least one piece of information on a number of printing colors, information on toner, or information on a special color.

4. The information processing system according to one of claims 1 through 3, wherein the input information further comprises information on an environment where the print jobs are processed.

5. The information processing system according to one of claims 1 through 4, wherein the input information further comprises information on a printer that processes the print jobs.

6. The information processing system according to one of claims 1 through 5, wherein the input information comprises information on an order of processing the print jobs.

7. The information processing system according to one of claims 1 through 6, wherein the information on the cycledown occurring between the print jobs comprises presence or absence of the cycledown occurring between the print jobs and a time period of occurrence of the cycledown occurring between the print jobs.

8. The information processing system according to one of claims 1 through 7, wherein the model is learned using the time period of occurrence of the cycledown occurring between the print jobs, the time period being calculated from information on a record processed by a printer that processes the print jobs.

9. The information processing system according to one of claims 1 through 8, wherein the processor is configured to:
using the learned model, output the information on the cycledown occurring between the print jobs with respect to each of a plurality of patterns where an order of the print jobs is changed in a print schedule including a series of print jobs.

10. The information processing system according to claim 9, wherein the processor is configured to recommend at least one of the patterns in accordance with the information on the cycledown occurring between the print jobs output in each of the patterns.

11. The information processing system according to claim 10, wherein the information on the cycledown occurring between the print jobs comprises presence or absence of the cycledown occurring between the print jobs, and
wherein the processor is configured to recommend a pattern having a minimum number of occurrences of the cycledown among the patterns.

12. The information processing system according to claim 10, wherein the information on the cycledown occurring between the print jobs comprises a time period of occurrence of the cycledown, and
wherein the processor is configured to recommend a pattern having a minimum sum of time periods of occurrences from among the patterns.

13. A program causing a computer to execute a process for processing information, the process comprising:
outputting information on a cycledown that occurs between a plurality of new print jobs that are to be consecutively processed, by inputting, to a model, new input information including information on each of the new print jobs to be consecutively processed and information on print information to be printed in each of the new print jobs, the model being pre-learned to output information on a cycledown occurring between a plurality of print jobs when input information, including information on each of the print jobs to be consecutively processed and information on print information to be printed in each of the print jobs, is input.

14. An information processing method comprising:
outputting information on a cycledown that occurs between a plurality of new print jobs that are to be consecutively processed, by inputting, to a model, new input information including information on each of the new print jobs to be consecutively processed and information on print information to be printed in each of the new print jobs, the model being pre-learned to output information on a cycledown occurring between a plurality of print jobs when input information, including information on each of the print jobs to be consecutively processed and information on print information to be printed in each of the print jobs, is input.
